# EUROPEAN PATENT APPLICATION

(11) **EP 3 065 284 A1**
(43) Date of publication of application: **07.09.2016**
(21) Application number: 15157878.8
(22) Date of filing: 05.03.2015
(51) Int. Cl.: H02M 7/48

(54) **Converter comprising a switching input bridge, a resonant tank and a rectifying circuit**

(71) Applicant: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Mollov, Stefan, 35708 Rennes Cedex 7 (FR); Degrenne, Nicolas, 35708 Rennes Cedex 7 (FR)
(74) Representative: Le Guen-Maillet

(57) **Abstract**

The present invention concerns a converter comprising a switching input bridge, a resonant tank and a rectifying circuit, the resonant tank comprising a first capacitor, a first inductor and a second inductor, the second inductor being magnetically coupled to a third inductor connected to the rectifying circuit, wherein the first inductor is magnetically coupled to a fourth inductor and wherein the converter further comprises means for controlling at least a first switch which enables or not a current going through the fourth inductor.

## Description

The present invention relates generally to a converter comprising a switching input bridge, a resonant tank, and a rectifying circuit.

Resonant converters are employed in a myriad of power conversion applications. They typically contain a switching input bridge, a resonant tank, and a rectifying circuit.

Because of lower switching losses, resulting in higher frequency capabilities, they are a high-efficiency, high-density, and low-cost alternative over non-resonant converters. One drawback of resonant converters is their controllability.

Different possibilities are considered in order to control a resonant converter. One can vary the switching frequency of the input bridge or modulate the bridge switched voltage waveform to change the RMS voltage at the input of the resonant tank or modify the resonant frequency by modifying the values of one or several of its components like the capacitor, the inductor, or the transformer.

In the above mentioned possibilities, the control of the output voltage may require intervention on the input bridge and galvanically isolated feedback circuitry may be needed, or in case of multi-output converter, the action on the input bridge impacts all the converter outputs or the continuous modification of the resonant tank parameters requires variable passive devices which are costly or numerous control switches may be put in series with the power flow, and result in a low conversion efficiency.

The invention intends to provide a low-cost, high-density method and apparatus to control a resonant converter.

The present invention aims at providing a converter wherein the output voltage is controlled and wherein the feedback loop is galvanically isolated.

To that end, the present invention concerns a converter comprising a switching input bridge, a resonant tank, and a rectifying circuit, the resonant tank comprising a first capacitor, a first inductor and a second inductor, the second inductor being magnetically coupled to a third inductor connected to the rectifying circuit, characterized in that the first inductor is magnetically coupled to a fourth inductor and wherein the converter further comprises means for controlling at least a first switch which enables or not a current going through the fourth inductor.

Thus, the converter output is controlled by a non-isolated feedback circuitry modulating the state of switch.

According to a particular feature, the converter further comprises a fifth inductor magnetically coupled to a sixth inductor and wherein the converter further comprises means for controlling a second switch which enables or not a current going through the sixth inductor.

Thus, by using two switches, the number of finite values of gains is increased.

According to a particular feature, the converter further comprises a fifth inductor connected to the fourth inductor and the first switch and wherein the means for controlling the first switch enables or not a current going through the fifth inductor.

Thus, the gain of the resonant tank when the switch is conducting is modified by the fifth inductor.

According to a particular feature, the converter further comprises a second capacitor and the second capacitor, the fourth, inductors are connected in series.

Thus, the gain of the resonant tank when the switch is conducting is modified by the second capacitor.

According to a particular feature, the means for controlling at least the first switch comprises means for comparing the voltage provided by the converter to a reference voltage.

Thus, the output voltage of the converter is feedback controlled with controller referenced to the secondary side of the isolation barrier constituted by the inductors magnetically coupled.

According to a particular feature, the means for controlling at least the first switch comprises switching instant decision means which adjusts the switching time of the first switch in order to change the state of the first switch when the current going through the fourth inductor is null or the voltage on the fourth inductor is null.

Thus, the switching losses in the switch are reduced.

The characteristics of the invention will emerge more clearly from a reading of the following description of example embodiments, the said description being produced with reference to the accompanying drawings, among which :
Fig. 1 represents an example of a resonant converter according to the present invention;
Fig. 2 represents an example of an architecture of a controller of the converter according to the present invention ;
Fig. 3 represents the equivalent circuit of a resonant tank, with ideal transformers according to the present invention;
Fig. 4 represents gain control with variation of frequency according to the present invention;
Fig. 5 represents theoretical voltage signals generated according to the present invention;
Fig. 6 represents different signals related to the power flow control according to the present invention;
Figs. 7 represent examples of variants of the architecture of the resonant converter according to the present invention.

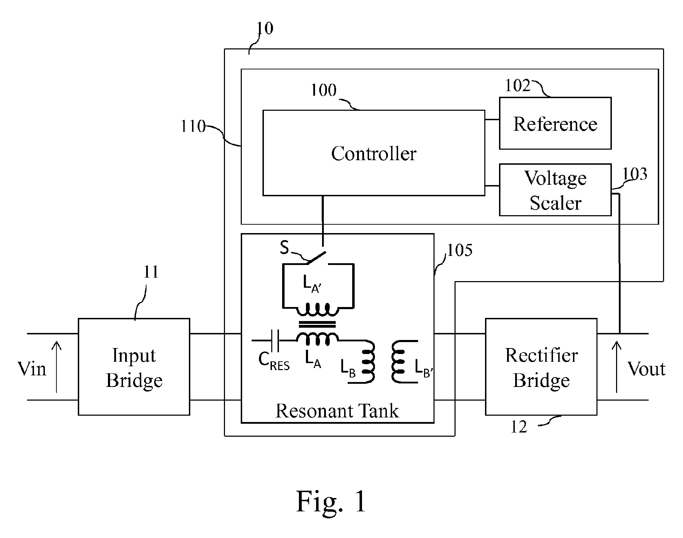

**Fig. 1** represents an example of a resonant converter according to the present invention.

The resonant converter comprises a switching input bridge 11, a controlled resonant tank 10, and a rectifying circuit 12.

The controlled resonant tank 10 comprises a resonant tank 105 and a switch controller 110. The switch controller 110 comprises a controller 100, a reference voltage source 102 and a voltage scaler 103.

The input bridge 11 is connected to the input of the controlled resonant tank 10, the output of the controlled resonant tank 10 is connected to the input of the rectifying circuit 12 and the output of the rectifying circuit 12 is connected to the voltage scaler 103 and a load not shown in Fig. 1.

It has to be noted here that in a variant the voltage scaler 103 may be connected to the output of the controlled resonant tank 10 instead of being connected to the output of the rectifying circuit 12.

The sensed output voltage of the rectifying circuit 12, once adapted by a voltage scaler 103 named also signal conditioner, is provided to the controller 100.

The controller 100 compares the output of the voltage scaler to the reference voltage provided by the reference voltage source 102.

The reference voltage may be a predetermined reference voltage or modified by the controller 100 according an output voltage requirement.

The reference voltage 102 and the comparator 101 are example of a feedback loop that may be implemented into different manners.

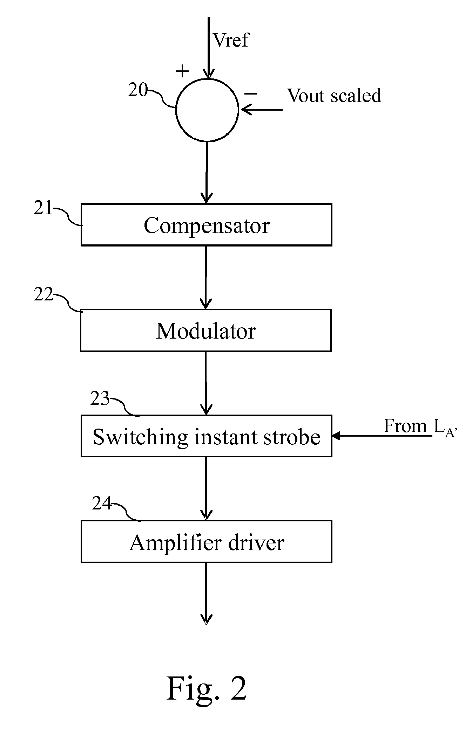

The controller 100 architecture will be disclosed in more detail in reference to Fig. 2. The controller 100 controls a switch S through a driver not shown in Fig. 1 which enables or not current going through an inductor L_{A'}. It has to be noted here that as the inductor L_{A'} is controlled, the driver of the switch S does not need to provide a galvanic isolation.

The switch S may be implemented in different technologies (e.g. MOSFET, JFET, IGBT...) and different topologies, like for example two switches in series to allow bidirectional control.

It has to be noted here that the ratio between the inductor L_{A'} and an inductor L_{A} may be defined according the current and/or voltage going through the switch S.

The controller 100 may embed some control features like for example a proportional integral and/or PWM generation and driver features as it will be disclosed in reference to Fig. 2.

The inductor L_{A'} is magnetically coupled to the inductor L_{A} of the resonant tank 105.

The resonant tank 105 is composed of at least a capacitor C_{RES}, the inductor L_{A} and a transformer decomposed into inductors L_{B} and L_{B'} in Fig. 1.

The capacitor C_{RES} may be a dedicated component or may represent parasitic capacitors and/or may be a combination of a dedicated component and parasitic capacitors.

The capacitor C_{RES} and the inductor L_{A} are on the primary side of the transformer composed of the inductors L_{B} and L_{B'}. Such configuration maintains a good galvanic isolation.

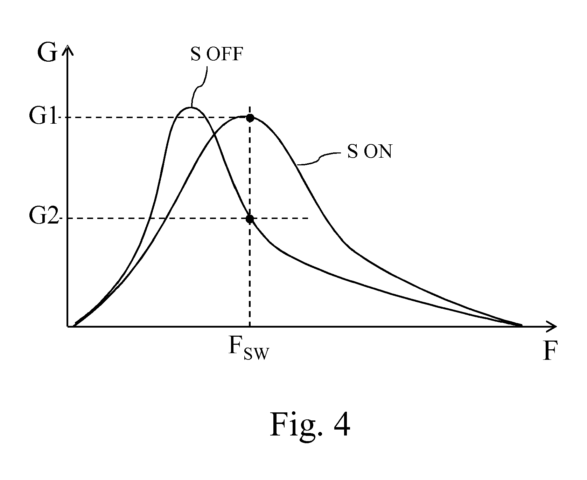

The invention is based on the discrete modification of the resonant tank into a finite number of topologies, for the sake of simplicity, two in the example of Fig. 1. Each and every configuration of the resonant tank 105 gives a singular gain characteristic as shown in Fig. 4.

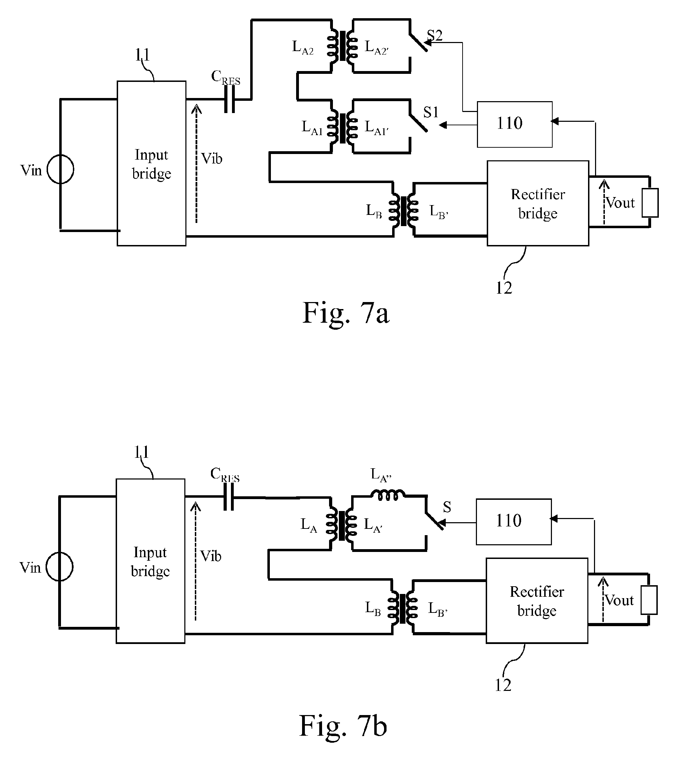

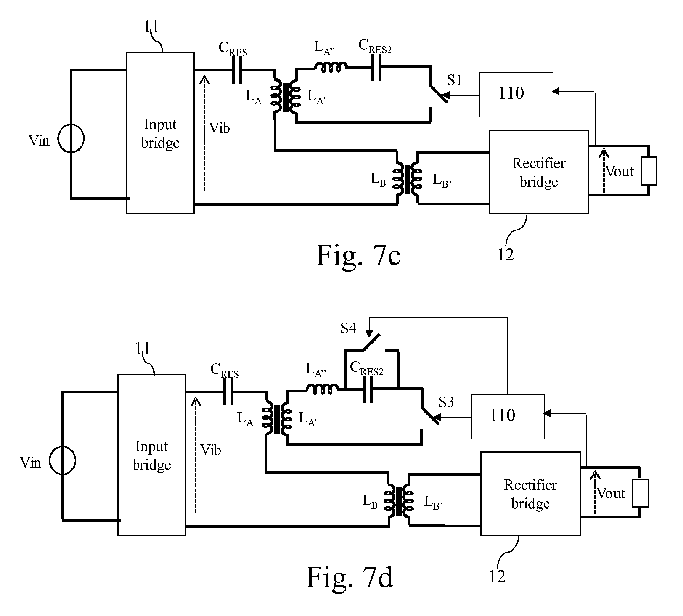

It has to be noted here that in the example of Fig. 1, the switch S shunts the inductor L_{A'}. Other components like an inductor or a capacitor may be put in the loop constituted by the switch S and the inductor L_{A'} in order to modify the resonant frequency of the resonant tank 105. These components may be also shunted by other switches in order to provide a larger number of gain characteristics. Different variant of the architecture disclosed in Fig. 1 will be disclosed in reference to Figs. 7.

The input bridge 11 operates at a fixed frequency and duty-cycle. At a given moment in time, the gain of the resonant tank 105 can only equal one of the finite discrete values according to the state of the switch S providing to different gains. When the switch S is alternatively in ON and OFF state, the resonant tank 105 topology is switched between two configurations. The average value of the gain can be modified between the two boundaries of the gains corresponding to the two configurations. For example, the voltage and power control is achieved by modulating the time spent in the two states. The time spent in the two states is substantially longer than the resonant tank natural period, for example 100 or 1000 times longer than the resonant tank natural period and of the switching frequency period.

The tank natural period is for example in the order of the micro second and may be defined according the application in which the present invention is used.

The output voltage ripple, for a given converter output filter configuration, is then a function of the load and the time durations spent in the two states.

**Fig. 2** represents an example of an architecture of a controller of the converter according to the present invention.

The controller 100 comprises a summing function 20 which sums the output of the voltage scaler to the reference voltage provided by the reference voltage source 102.

The output of the comparator 20 is provided to a compensation module 21 which performs for example an integral filtering of the signal provided by the comparator 20.

The output of the compensation module 21 is provided to a modulator 22 which generates a pulse width modulation.

The pulse width modulation signal may be provided to an amplifier driver 24 or, according to a particular mode of realization, to a switching instant decision module 23.

The switching instant decision module 23 adjusts the switching time of the switch S in order to change the state of the switch when the current going through the inductor L_{A'} is null or the voltage across the inductor L_{A'} is null.

The instant decider may trigger the switch when the voltage across it is zero (Zero Voltage Switching ZVS) or when the current through it is zero (Zero Current switching ZCS) to decrease the switching losses in S. In some cases when the coupling between L_{A} and L_{A'} is not equal to one, Zero Current Switching also prevents any turn-off over-voltage across the switch S.

The output of the modulator 22 or of the switching instant decision module 23 is amplified by the amplifier 24 in order to control the switch S.

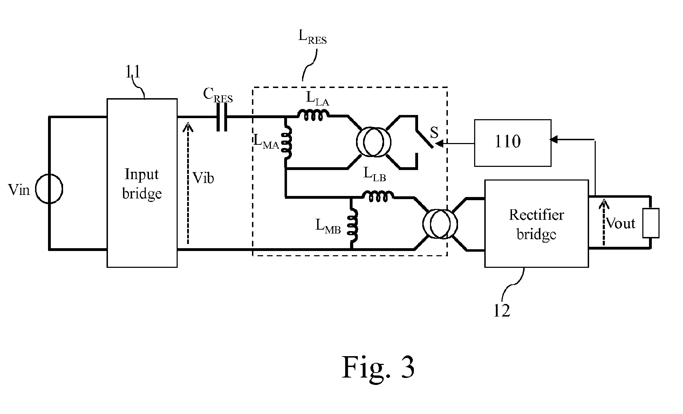

**Fig. 3** represents the equivalent circuit of a resonant tank, with ideal transformers according to the present invention.

The voltage at the input of the input bridge is noted Vin. The voltage at the input of the resonant tank 105 is noted Vib and is an alternating signal of a frequency F_{SW}.

The coupled inductors L_{A} and L_{A}' form an equivalent primary magnetizing inductor L_{MA} and an equivalent primary leakage inductor L_{LA}.

The coupled inductors L_{B} and L_{B}' form an equivalent primary magnetizing inductor L_{MB} and an equivalent primary leakage inductor L_{LB}.

A first terminal of the input bridge output is connected to a first terminal of the capacitor C_{RES}.

The second terminal of the capacitor C_{RES} is connected to a first terminal of the equivalent primary leakage inductor L_{LA} and to a first terminal of the equivalent primary magnetizing inductor L_{MA}. The second terminal of the equivalent primary leakage inductor L_{LA} is connected to a second terminal of the equivalent primary magnetizing inductor L_{MA} through an ideal transformer. The second terminal of the equivalent primary magnetizing inductor L_{MA} is connected to a first terminal of the equivalent primary leakage inductor L_{LB} and to a first terminal of the equivalent primary magnetizing inductor L_{MB}. The second terminal of the equivalent primary leakage inductor L_{LB} is connected to a second terminal of the equivalent primary magnetizing inductor L_{MB} through an ideal transformer. The second terminal of the equivalent primary magnetizing inductor L_{MB} is connected to a second terminal of the input bridge output.

Naturally, the connection of elements in the resonant tank can be modified. As an example, the capacitor C_{RES} can be positioned between the ideal transformers.

When the switch S is OFF, i.e. in a non conducting state, the equivalent resonant inductor of the resonant tank 105 is a function *f_{GOFF}()* of, L_{MA} ,L_{MB} and L_{LB}.

When the switch S is ON, i.e. in a conducting state, the equivalent resonant inductor of the resonant tank 105 is a different function *f_{GON}()* of L_{LA}, L_{MA}, L_{MB} and L_{LB}.

Then, the static voltage gain of the converter is a function of the ratio between *f_{GOFF}(L_{MA}, L_{MB}, L_{LB})* and *f_{GON}* (L_{LA}, L_{MA}, L_{MB}, L_{LB}), the function depending on the exact configuration of the resonant tank.

For example, the voltage at the input of the Input bridge is equal to 10 Volts, the capacitor C_{RES} value is equal to 792pF, the inductor L_{LA} value is equal to 20nH, the inductor L_{MA} value is equal to 200nH, the inductor L_{LB} value is equal to 100nH, the inductor L_{MB} value is equal to 1000nH, the frequency F_{SW} of the voltage Vib is equal to 10MHz and the frequency of the switching of the switch S is equal to F_{CONT}=10kHz.

**Fig. 4** represents gain control with variation of frequency according to the present invention.

The horizontal axis represents the frequency and the vertical axis represents the gain of the resonant tank 105.

According to the state of the switch S, at the same frequency, two different gains G1 and G2 are obtained.

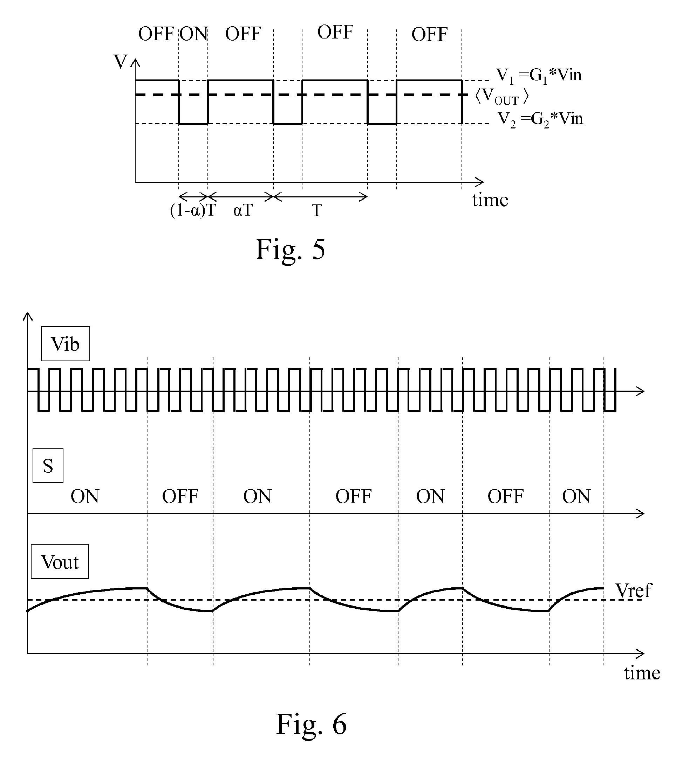

**Fig. 5** represents theoretical voltage signals generated according to the present invention.

The mean of output voltage is linked to the duty cycle α by Vout=Vin*(αG1+(1-α)G2).

The horizontal axis represents the duty cycle value variations and the vertical axis represents the voltage Vout value for an input voltage of Vin.

The switching sequence of the switch can also be determined from any other control strategy, hysteresis control being of particular applicability.

**Fig. 6** represents different signals related to the power flow control according to the present invention.

In Fig. 6, the voltage Vib at the input of the resonant tank, the state of the switch S and the voltage Vout at the output of the rectifier bridge 12 are shown.

The output voltage ripple Vout is the sum of the switching frequency F_{SW} ripple and of the lower frequency of the switching of the switch S F_{CONT} ripple. Both, for a given converter output filter configuration, are a function of a load.

The voltage ripple of the switching frequency F_{SW} is not shown in Fig. 6.

**Fig. 7a** represents a first example of variant of the architecture of the resonant converter according to the present invention.

The voltage at the input of the input bridge 11 is noted Vin. The voltage at the input of the resonant tank is noted Vib and is an alternating signal of a frequency F_{SW}.

A first terminal of the input bridge 11 output is connected to a first terminal of the capacitor C_{RES}.

The second terminal of the capacitor C_{RES} is connected to a first terminal of the inductor L_{A2}.

The inductor L_{A2} is magnetically coupled to the inductor L_{A2'}.

A second terminal of the inductor L_{A2} is connected to a first terminal of an inductor L_{A1}.

The inductor L_{A1} is magnetically coupled to the inductor L_{A1'}.

A second terminal of the inductor L_{A1} is connected to a first terminal of an inductor L_{AB}.

The inductor L_{B} is magnetically coupled to the inductor L_{B'}.

A second terminal of the inductor L_{B} is connected to a second output terminal of the input bridge.

The inductor L_{B'}. is connected to the inputs of the rectifier bridge 12. The outputs of the rectifier bridge are connected to a load and to the switch controller 110.

The switch controller 110 controls two switches S1 and S2.

The controller 110 controls two switches S1 and S2 through a driver not shown in Fig. 7a which enables or not current going through an inductor L_{A1'} and/or L_{A2'}. It has to be noted here that as the inductors L_{A1'} and L_{A2'} are controlled, the driver of the switch S does not need to provide a galvanic isolation.

The switches S1 and S2 may be implemented in different technologies (e.g. MOSFET, JFET, IGBT...) and different topologies, like for example two switches in series to allow bidirectional control.

In the example of Fig. 7a, a the discrete modification of the resonant tank into a four different topologies is obtained.

**Fig. 7b** represents a second example of variant of the architecture of the resonant converter according to the present invention.

The voltage at the input of the input bridge 11 is noted Vin. The voltage at the input of the resonant tank is noted Vib and is an alternative signal of a frequency F_{SW}.

A first terminal of the input bridge 11 output is connected to a first terminal of the capacitor C_{RES}.

The second terminal of the capacitor C_{RES} is connected to a first terminal of the inductor L_{A}.

The inductor L_{A} is magnetically coupled to the inductor L_{A'}.

A second terminal of the inductor L_{A} is connected to a first terminal inductor L_{B}.

The inductor L_{B} is magnetically coupled to the inductor L_{B'}.

A second terminal of the inductor L_{B} is connected to a second output terminal of the input bridge.

The inductor L_{B'}. is connected to the inputs of the rectifier bridge 12. The outputs of the rectifier bridge 12 are connected to a load and to the switch controller 110.

The switch controller 110 controls the switch S.

A first terminal of the switch S is connected to a first terminal of the inductor L_{A'}. A second terminal of the inductor L_{A'} is connected to a first terminal of an inductor L_{A''}. A second terminal of the inductor L_{A''} is connected to a second terminal of the switch S.

The controller 110 controls the switch S through a driver not shown in Fig. 7b which enables or not current going through an inductor L_{A'}. It has to be noted here that as the inductor L_{A'} is controlled, the driver of the switch S does not need to provide a galvanic isolation.

The switch S may be implemented in different technologies (e.g. MOSFET, JFET, IGBT...) and different topologies, like for example two switches in series to allow bidirectional control.

In the example of Fig. 7b, the discrete modification of the resonant tank into a two different topologies is obtained. The gain function when S is ON depends on L_{A''}.

**Fig. 7c** represents a third example of variant of the architecture of the resonant converter according to the present invention.

The voltage at the input of the input bridge 11 is noted Vin. The voltage at the input of the resonant tank is noted Vib and is an alternative signal of a frequency F_{SW}.

A first terminal of the input bridge 11 output is connected to a first terminal of the capacitor C_{RES}.

The second terminal of the capacitor C_{RES} is connected to a first terminal of the inductor L_{A}.

The inductor L_{A} is magnetically coupled to the inductor L_{A'}.

A second terminal of the inductor L_{A} is connected to a first terminal inductor L_{B}.

The inductor L_{B} is magnetically coupled to the inductor L_{B'}.

A second terminal of the inductor L_{B} is connected to a second output terminal of the input bridge.

The inductor L_{B'}. is connected to the inputs of the rectifier bridge 12. The outputs of the rectifier bridge 12 are connected to a load and to the switch controller 110.

The switch controller 110 controls the switch S.

A first terminal of the switch S is connected to a first terminal of the inductor L_{A'}. A second terminal of the inductor L_{A'} is to a first terminal of an inductor L_{A''}. A second terminal of the inductor L_{A''} is connected to a first terminal of a capacitor C_{RES2}. A second terminal of the capacitor C_{RES2} is connected to a second terminal of the switch S.

The controller 110 controls the switch S through a driver not shown in Fig. 7c which enables or not current going through an inductor L_{A'}. It has to be noted here that as the inductor L_{A'} is controlled, the driver of the switch S does not need to provide a galvanic isolation.

The switch S may be implemented in different technologies (e.g. MOSFET, JFET, IGBT...) and different topologies, like for example two switches in series to allow bidirectional control.

In the example of Fig. 7c, the discrete modification of the resonant tank into a two different topologies is obtained. The gain function when S is ON depends on C_{RES2}.

**Fig. 7d** represents a fourth example of variant of the architecture of the resonant converter according to the present invention.

The voltage at the input of the input bridge 11 is noted Vin. The voltage at the input of the resonant tank is noted Vib and is an alternative signal of a frequency F_{SW}.

A first terminal of the input bridge 11 output is connected to a first terminal of the capacitor C_{RES}.

The second terminal of the capacitor C_{RES} is connected to a first terminal of the inductor L_{A}.

The inductor L_{A} is magnetically coupled to the inductor L_{A'}.

A second terminal of the inductor L_{A} is connected to a first terminal inductor L_{B}.

The inductor L_{B} is magnetically coupled to the inductor L_{B'}.

A second terminal of the inductor L_{B} is connected to a second output terminal of the input bridge.

The inductor L_{B'}. is connected to the inputs of the rectifier bridge 12. The outputs of the rectifier bridge 12 are connected to a load and to the switch controller 110.

The switch controller 110 controls the switches S3 and S4.

A first terminal of the switch S3 is connected to a first terminal of the inductor L_{A'}. A second terminal of the inductor L_{A'} is to a first terminal of an inductor L_{A''}. A second terminal of the inductor L_{A''} is connected to a first terminal of a capacitor C_{RES2}. A second terminal of the capacitor C_{RES2} is connected to a second terminal of the switch S3.

The first terminal of a capacitor C_{RES2} is connected to a first terminal of a switch 4. The second terminal of the capacitor C_{RES2} is connected to a second terminal of the switch S4.

The controller 110 controls the switch S through a driver not shown in Fig. 7d which enables or not current going through an inductor L_{A'}. It has to be noted here that as the inductor L_{A'} is controlled, the driver of the switch S does not need to provide a galvanic isolation.

The switch S may be implemented in different technologies (e.g. MOSFET, JFET, IGBT...) and different topologies, like for example two switches in series to allow bidirectional control.

In the example of Fig. 7a, the discrete modification of the resonant tank into four different topologies is obtained. The gain function when the switches S3 and S4 are ON depends on L_{A''} The gain function when S3 only is ON depends on L_{A''} and C_{RES2}.

Naturally, many modifications can be made to the embodiments of the invention described above without departing from the scope of the present invention.

For example, the converter may comprise plural resonant tanks and rectifying circuits, the outputs being controlled as disclosed in the present invention.

The present invention is disclosed in an example wherein the resonant tank comprises one capacitor. The present invention is also applicable to resonant tanks comprising more than one capacitor, for example having a second capacitor connected in parallel with inductor L_{B} of Figs. 7.

## Claims

1. A converter comprising a switching input bridge, a resonant tank, and a rectifying circuit, the resonant tank comprising a first capacitor, a first inductor and a second inductor, the second inductor being magnetically coupled to a third inductor connected to the rectifying circuit, **characterized in that** the first inductor is magnetically coupled to a fourth inductor and wherein the converter further comprises means for controlling at least a first switch which enables or not a current going through the fourth inductor.

2. The converter according to claim 1, **characterized in that** the converter further comprises a fifth inductor magnetically coupled to a sixth inductor and wherein the converter further comprises means for controlling a second switch which enables or not a current going through the sixth inductor.

3. The converter according to claim 1, **characterized in that** the converter further comprises a fifth inductor connected to the fourth inductor and the first switch and wherein the means for controlling the first switch enable or not a current going through the fifth inductor.

4. The converter according to claim 1, **characterized in that** the converter further comprises a second capacitor and the second capacitor, the fourth, the fifth inductors are connected in series.

5. The converter according to claim 4, **characterized in that** the converter further comprises a second switch which shunts or not the second capacitor.

6. The converter according to any of the claims 1 to 5, **characterized in that** the means for controlling at least the first switch comprises means for comparing the voltage provided by the converter to a reference voltage.

7. The converter according to claim 6, **characterized in that** the means for controlling at least the first switch comprises switching instant decision means which adjusts the switching time of the first switch in order to change the state of the first switch when the current going through the fourth inductor is null or the voltage on the fourth inductor is null.
